# EUROPEAN PATENT APPLICATION

(11) **EP 3 018 801 A1**
(43) Date of publication of application: **11.05.2016**
(21) Application number: 14819546.4
(22) Date of filing: 03.06.2014
(51) Int. Cl.: H02K 7/02, F16H 33/02

(54) **ENERGY STORAGE DEVICE**

(30) Priority: 02.07.2013 KR 20130077074
(71) Applicant: IUCF-HYU (Industry-University Cooperation Foundation Hanyang University), Seoul 133-791 (KR)
(72) Inventor: SUNG, Tae Hyun, Seoul 135-834 (KR)
(74) Representative: RGTH
(86) International application number: PCT/KR2014/004922
(87) International publication number: WO 2015/002382

(57) **Abstract**

An energy storage device according to an embodiment of the present invention stores electric energy generated by an electricity generation unit as rotational kinetic energy or supplies the stored electric energy to the electricity generation unit. The energy storage device may comprise: a rotation body having a rotary shaft; a housing having a bearing for rotatably supporting the rotary shaft and supporting or surrounding at least a part of the rotation body; and a buoyancy unit, a part of which is coupled to the rotation body and the other part of which is coupled to the housing, thereby generating power to buoy the rotation body. According to the embodiment of the present invention, the rotation body is buoyant and rotates by the buoyancy unit. Thus, it is possible to improve energy conversion efficiency by minimizing friction loss. Also, it is possible to minimize a cost increase as well as being applicable to bulk storage by simultaneously employing buoyancy by a mechanical bearing and a superconductor.

## Description

### Technical Field

Example embodiments relate to an energy storage device, and more particularly, to an energy storage device that may store electrical energy as rotational kinetic energy and, if necessary, may convert, to electrical energy, rotational kinetic energy generated in response to a rotational motion and use the converted electrical energy, and may also achieve a reduction of cost and excellent efficiency.

### Related Art

With an increase in a power demand, a difference between a power amount used during the day and a power amount used during the night increases. Further, natural energy usage gravity is currently increasing and a scale of power generation is gradually being enlarged. To cope therewith, the capacity of a power generation system is also on the gradual increase, which leads to causing issues in stabilizing a power system. In the case of a general new and renewable energy development or a power generation using solar light or wind, a power generation amount is unstable due to irregular natural energy. Thus, there is a great need for a storage device.

To solve the above issues, various types of storage devices are under consideration. However, when considering a power generation amount of new and renewable energy over time or storage of a mass power amount that is instantaneously discharged in response to a stop of a railroad carriage, an energy storage device suitable for fast charging and discharging is under development.

As a general type of a storage device, a water-pump power generation system is configured to produce power by making an upper reservoir and a lower reservoir in the mountains and the like and by pumping the water in the lower reservoir up to the upper reservoir during the night when power consumption cost is relatively low and by flowing the water from the upper reservoir to the lower reservoir during the day when the power consumption cost is relatively high. Also, an ice storage method performs air conditioning by freezing the water using relatively low-cost power during the night and by operating a fan during the day, instead of using an air conditioner. A compressed air storage method generates power by penetrating the rock thereby storing the compressed air therein and by turning a turbine from the compressed air if necessary. Alternatively, a storage method uses a chemical cell type NaS cell, a lithium ion cell, and the like, which stores energy using chemical reaction. In addition, a flywheel energy storage device that stores electrical energy robust against fast charging and discharging as rotational kinetic energy using a motor and converts the rotational kinetic energy to the electrical energy and thereby uses the converted electrical energy using a power generator if necessary is under development.

Here, the flywheel energy storage device generates energy by rotation and thus, uses a bearing in order to reduce rotation loss. Here, if a ball bearing is used, the flywheel energy storage device is a mechanical flywheel energy storage device. If an electromagnet bearing is used, the flywheel energy storage device is an electromagnet flywheel energy storage device. If a superconductive bearing is used, the flywheel energy storage device is a superconductive flywheel energy storage device.

Since the mechanical flywheel energy storage device uses a mechanical ball, friction loss is great. Accordingly, the mechanical flywheel energy storage device may not be employed as an efficient flywheel system. In the case of using the electromagnet bearing, a rotation body is to be buoyed using an electromagnet. Accordingly, the electromagnet flywheel energy storage device may not be readily applied to a large capacity flywheel system. In the case of using the superconductive bearing, cost may increase due to expensive cost of cooling equipment and the superconductor.

Accordingly, there is a need for developing a flywheel energy storage device that may enhance the efficiency by reducing friction loss and may be applicable to a large capacity and minimize an increase in cost.

### Detailed Description

### Technical Subject

Example embodiments provide an energy storage device that may store electrical energy as rotational kinetic energy and, if necessary, may convert, to electrical energy, rotational kinetic energy generated in response to a rotational motion and use the converted electrical energy, and may also achieve a reduction of cost and excellent efficiency.

Example embodiments also provide an energy storage device that may enhance the energy conversion efficiency by minimizing friction loss since a rotation body is buoyed by a buoyancy unit and thereby rotates, and may also be applicable to a large capacity and minimize an increase in cost by applying the buoyancy by a superconductor and a mechanical bearing together.

Example embodiments also provide an energy storage device that may be applicable for a variety of cases, for example, a case of quickly using stored energy, such as in a railroad, a case of storing energy in a uninterruptable power supply (UPS) during a long period of time, such as in a hospital or important facility, and using the stored energy if necessary, and the like, and thereby enhance the energy storage efficiency over cost.

### Technical Solution

According to an aspect of example embodiments, there is provided an energy storage device to store electrical energy generated at an electricity generator as rotational kinetic energy or to supply the stored rotational kinetic energy to the electricity generator, the energy storage device including: a rotation body having a rotary shaft; a housing having a bearing for rotatably supporting the rotary shaft, and configured to support or surround at least a portion of the rotation body; and a buoyancy unit of which a portion is coupled to the rotation body and another portion is coupled to the housing, thereby generating a force for buoying the rotation body. Through this configuration, since the rotation body is buoyed by the buoyancy unit and thereby rotates, it is possible to enhance the energy conversion efficiency by minimizing friction loss. Further, it is possible to apply the energy storage device to a large capacity and to minimize an increase in cost by applying the buoyancy by a superconductor and a mechanical bearing together.

The buoyancy unit may include a permanent magnet provided to one of the housing and the rotation body; and a superconductor provided to the other one of the housing and the rotation body, and the buoyancy unit may be configured to buoy the rotation body by interaction between the permanent magnet and the superconductor.

The housing may include a support frame configured to rotatably support a lower end portion of the rotary shaft; and a cover frame configured to cover at least a portion of the support frame and the rotation body. One of the permanent magnet and the superconductor may be attached to the cover frame or the support frame, and the other one of the permanent magnet and the superconductor may be attached to the rotation body.

The permanent magnet may be attached at a lower end portion of the rotation body, and the superconductor may be attached at an upper end portion of the support frame to be positioned below the permanent magnet.

The lower end portion of the rotation body and the upper end portion of the support frame may be provided in a corresponding step form, a unit-type permanent magnet may be attached to the ceiling and the side of each stair of the rotation body, and a unit-type superconductor may be attached to the bottom and the side of each stair of the support frame to correspond to the unit-type permanent magnet.

The permanent magnet may be attached at an upper end portion of the rotation body, and the superconductor may be attached to the interior of an upper wall of the cover frame to be positioned above the permanent magnet.

The buoyancy unit may include a permanent magnet and a superconductor. The housing may include a support frame configured to rotatably support a lower end portion of the rotary shaft; a cover frame configured to cover the support frame and the rotation body. The superconductor may be attached at an upper end portion of the support frame and the permanent magnet may be attached at a lower end portion of the rotation body, and the permanent magnet may be attached at an upper end portion of the rotation body and the superconductor may be attached to the interior of an upper wall of the cover frame.

The energy storage device may further include a cooling portion configured to provide a cooling material for cooling the superconductor.

The cooling portion may include a circulation line configured to provide and then retrieve the cooling material to and from an area to which the superconductor is provided; a liquefying member disposed on the circulation line and configured to liquefy the cooling material; and a pumping member configured to pump the cooling material to transport the cooling material through the circulation line.

The buoyancy unit may include at least a single pair of permanent magnets, one being provided to one of the housing and the rotation body and the other being provided to the other one thereof to correspond to each other, and the at least a single pair of permanent magnets may have the same pole or different poles.

The housing may include a support frame configured to rotatably support a lower end portion of the rotary shaft; and a cover frame configured to cover at least a portion of the support frame and the rotation body. One of the single pair of permanent magnets having the same pole may be attached at an upper end portion of the support frame and the other one thereof may be attached at a lower end portion of the rotation body.

The housing may include a support frame configured to rotatably support a lower end portion of the rotary shaft; and a cover frame configured to cover at least a portion of the support frame and the rotation body. One of the single pair of permanent magnets having the different poles may be attached at an upper end portion of the rotation body and the other one thereof may be attached to the interior of an upper wall of the cover frame.

The housing may include a support frame configured to rotatably support a lower end portion of the rotary shaft; and a cover frame configured to cover at least a portion of the support frame and the rotation body. One of the single pair of permanent magnets having the same pole may be attached at an upper end portion of the support frame and the other one thereof may be attached at a lower end portion of the rotation body. One of the single pair of permanent magnets having the different poles may be attached at an upper end portion of the rotation body and the other one thereof may be attached to the interior of an upper wall of the cover frame.

The bearing may be provided using a single pair of ball bearings provided at an upper end portion and a lower end portion of the rotary shaft, respectively, to rotatably support the rotary shaft.

According to another aspect of example embodiments, there is provided an energy storage device to store electrical energy generated at an electricity generator as rotational kinetic energy or to supply the stored rotational kinetic energy to the electricity generator, the energy storage device including a rotation body having a rotary shaft; a housing configured to rotatably support the rotary shaft and to surround at least a portion of the rotation body; a permanent magnet provided to one of the rotation body and the housing; a superconductor provided to the other one of the rotation body and the housing to face the permanent magnet; and a cooling portion configured to provide a cooling material for cooling the superconductor. It is possible to buoy the rotation body based on a principle of decreasing electrical resistance by lowering a temperature of the superconductor using the cooling material of the cooling portion and separating the permanent magnet from the superconductor.

The housing may include a support frame configured to rotatably support a lower end portion of the rotary shaft; and a cover frame configured to cover at least a portion of the support frame and the rotation body. One of the permanent magnet and the superconductor may be attached to the cover frame or the support frame, and the other one of the permanent magnet and the superconductor may be attached to the rotation body.

The permanent magnet may be attached at a lower end portion of the rotation body, and the superconductor may be attached at an upper end portion of the support frame to be positioned below the permanent magnet.

The permanent magnet may be attached at an upper end portion of the rotation body, and the superconductor may be attached to the interior of an upper wall of the cover frame to be positioned above the permanent magnet.

The cooling portion may include a circulation line configured to provide and then retrieve the cooling material to and from an area to which the superconductor is provided; a liquefying member disposed on the circulation line and configured to liquefy the cooling material; and a pumping member configured to pump the cooling material to transport the cooling material through the circulation line.

The housing may include a single pair of ball bearings provided at an upper end portion and a lower end portion of the rotary shaft, respectively, to rotatably support the rotary shaft.

### Effect

According to example embodiments, it is possible to store electrical energy as rotational kinetic energy and, if necessary, to convert, to electrical energy, rotational kinetic energy generated in response to a rotational motion and use the converted electrical energy. Further, it is possible to achieve a reduction of cost and excellent efficiency.

Also, according to example embodiments, since a rotation body is buoyed by a buoyancy unit and thereby rotates, it is possible to enhance the energy conversion efficiency by minimizing friction loss. Also, it is possible to achieve an energy storage device to a large capacity and to minimize an increase in cost by applying the buoyancy by a superconductor and a mechanical bearing together.

Also, according to example embodiments, since an energy storage device is applicable for a variety of cases, for example, a case of quickly using stored energy, such as in a railroad, a case of storing energy in a uninterruptable power supply (UPS) during a long period of time, such as in a hospital or important facility, and using the stored energy if necessary, and the like, it is possible to enhance the energy storage efficiency over cost.

### Brief Description of Drawings

FIG. 1 is a cross-sectional view illustrating a configuration of a flywheel energy storage device according to a first example embodiment;
FIG. 2 illustrates a cooling portion for cooling a superconductor of FIG. 1;
FIG. 3 is a cross-sectional view illustrating a configuration of a flywheel energy storage device according to a second example embodiment;
FIG. 4 is a cross-sectional view illustrating a configuration of a flywheel energy storage device according to a third example embodiment;
FIG. 5 is a cross-sectional view illustrating a configuration of a flywheel energy storage device according to a fourth example embodiment;
FIG. 6 is a cross-sectional view illustrating a configuration of a flywheel energy storage device according to a fifth example embodiment;
FIG. 7 is a cross-sectional view illustrating a configuration of a flywheel energy storage device according to a sixth example embodiment;
FIG. 8 is a cross-sectional view illustrating a configuration of a flywheel energy storage device according to an eighth example embodiment; and
FIGS. 9 through 12 partially illustrate various modification examples of FIG. 8.

### Best Mode

Hereinafter, a configuration and operation according to example embodiments will be described with reference to the accompanying drawings. The following explanation may be one of various aspects of the example embodiments and the following description may be a portion of the detailed description relating thereto.

Here, the detailed description relating to a known art or configuration when describing the example embodiments will be omitted for clarity of description.

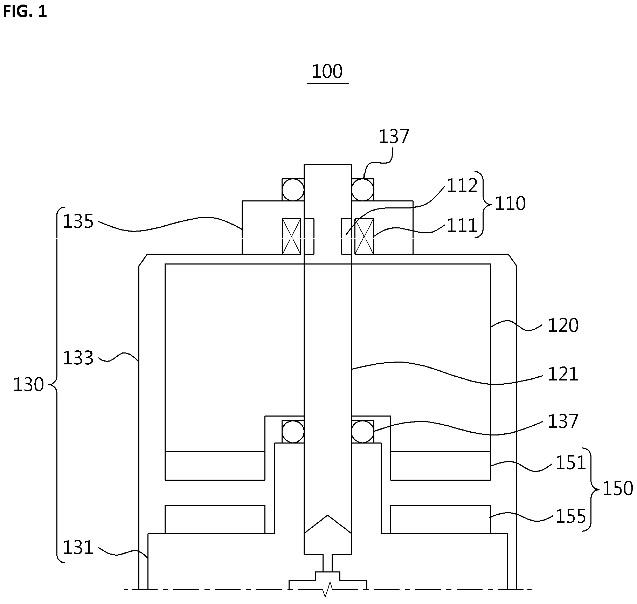

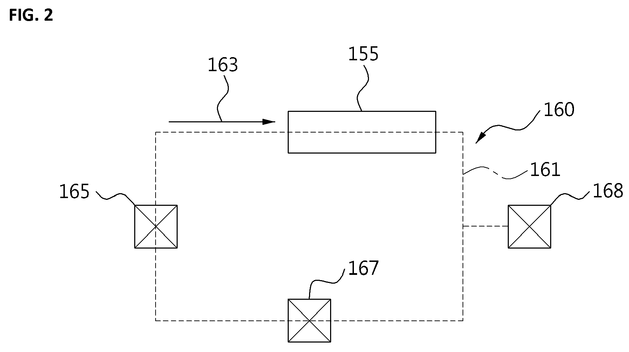

FIG. 1 is a cross-sectional view illustrating a configuration of a flywheel energy storage device according to a first example embodiment, and FIG. 2 illustrates a cooling portion for cooling a superconductor of FIG. 1.

Referring to FIGS. 1 and 2, an energy storage device 100 according to the first example embodiment, for example, a flywheel energy storage device 100 may store electrical energy as rotational kinetic energy generated at an electricity generator 110, for example, a motor/generator, or may supply the stored rotational kinetic energy to the electricity generator 110, and may include a rotation body 120 having a rotary shaft 121, a housing 130 having a bearing 137 for rotatably supporting the rotary shaft 121 and configured to surround the rotation body 120, and a buoyancy unit 150 configured to buoy the rotation body 120.

The electricity generator 110 configured to generate the electrical energy refers to a motor/generator and includes a coil 111 and a permanent magnet 112. Thus, in response to rotating of the rotation body 120, the electrical energy may be generated through interaction between the coil 111 and the permanent magnet 112. The generated electrical energy may be stored in a rotational kinetic energy state in the rotation body 120 by the electricity generator 110 and may be converted to the electrical energy and thereby be used if necessary.

Describing each configuration, the rotation body 120 may be provided in a cylindrical shape of FIG. 1, and may rotate based on the rotary shaft 121 by including the rotary shaft 121. Here, friction loss may occur due to the rotation. In the example embodiments, the buoyancy unit 150 is provided to minimize the friction loss occurring due to the rotation of the rotation body 120. It will be described below.

Meanwhile, the housing 130 serves to provide a space for protecting, supporting, and/or mounting a plurality of configurations in addition to the rotation body 120. Referring to FIG. 1, the housing 130 may include a support frame 131 configured to rotatably support a lower end portion of the rotary shaft 121, a cover frame 133 configured to cover the support frame 131 and the rotation body 120, and a protection frame 135 configured to protect the bearing 137.

That is, the bearing 127 for rotatably supporting the rotation body 120 may be mounted to the housing 130. In the example embodiments, the bearing 137 may be provided using a single pair of ball bearings. Thus, a single ball bearing 137 may be provided at a upper end portion of the rotary shaft 121 to which the rotation body 120 is coupled and the other ball bearing 137 may be provided between the rotation body 120 and the support frame 131. Since the ball bearings 137 are provided in a mechanical structure, the rotating operation of the rotation body 120 may be firmly performed. As described above, in the case of using the ball bearing 137, a relatively great amount of friction loss occurs. In the example embodiments, since the rotation body 120 rotates in a buoyancy state, the occurrence of friction loss may be minimized although the ball bearing 137 is employed as the bearing 137.

Although the example embodiments describe the bearing 137 as the bearing 137, it is only an example. Thus, a different type of a bearing such as a superconductor bearing may be applicable.

The buoyancy unit 150 according to the present example embodiment may reduce the friction loss so that the rotation body 120 may rotate in a buoyancy state. Also, the buoyancy unit 150 enables the energy storage device 100 to be applicable to a large capacity, thereby minimizing an increase in cost.

Referring to FIG. 1, the buoyancy unit 150 may include a permanent magnet 151 attached at a lower end portion of the rotation body 120 and a superconductor 155 attached at an upper end portion of the support frame 131 to be positioned below the permanent magnet 151.

The buoyancy unit 150 may buoy the rotation body 120 relative to the support frame 131 by employing a principle of making electrical resistance become close to zero by decreasing a temperature of the superconductor 155 to an extremely low temperature and thereby separating the permanent magnet 151 away from the superconductor 155. Accordingly, the rotation body 120 may rotate in this buoyancy state, thereby significantly reducing the friction loss.

Referring to FIG. 2, the energy storage device 100 may include a cooling portion 160 for cooling the superconductor 155. The cooling portion 160 according to the present example embodiment may include a circulation line 161 configured to provide and then retrieve a cooling material, for example, liquid nitrogen 163 to and from an area to which the superconductor 155 is provided, a liquefying member 165 disposed on the circulation line 161 to liquefy the liquid nitrogen 163, and a pumping member 167 configured to pump the liquid nitrogen 163 to circulate the liquid nitrogen 163 through the circulation line 161. Also, the circulation line 161 may be connected to a supply tank 168 configured to supply the cooling material, for example, the liquid nitrogen 163.

Through the above configuration, it is possible to adjust a cooling level of the superconductor 155, and to adjust a buoyancy level of the rotation body 120 relative to the support frame 131. As a result, the rotation body 120 may rotate in this buoyancy state.

Meanwhile, a different type of a cooling method may be applicable. For example, it is possible to execute cooling of the superconductor 155 by surrounding the superconductor 155 with copper (Cu) and by performing conductive cooling. As described above, a variety of methods may be applicable for cooling the superconductor 155.

According to the first example embodiment, since it is possible to store electrical energy as rotational kinetic energy and to, if necessary, convert, to electrical energy, rotational kinetic energy generated in response to a rotational motion and to use the converted electrical energy, it is possible to achieve a reduction of cost and excellent efficiency. In addition, since the rotation body 120 is buoyed by the buoyancy unit 150 and thereby rotates, it is possible to enhance the energy conversion efficiency by minimizing the friction loss. Also, it is possible to apply the energy storage device 100 to a large capacity by applying the buoyancy by the superconductor 155 and the mechanical bearing 137 together, and to minimize an increase in cost.

Further, since the energy storage device 100 is applicable for a variety of cases, for example, a case of quickly using stored energy, such as in a railroad, a case of storing energy in a uninterruptable power supply (UPS) during a long period of time, such as in a hospital or important facility, and using the stored energy if necessary, and the like, it is possible to enhance the energy storage efficiency over cost.

Hereinafter, an energy storage device according to a second example embodiment will be described. Here, a description relating to the substantially same portion to the energy storage device according to the first example embodiment will be omitted.

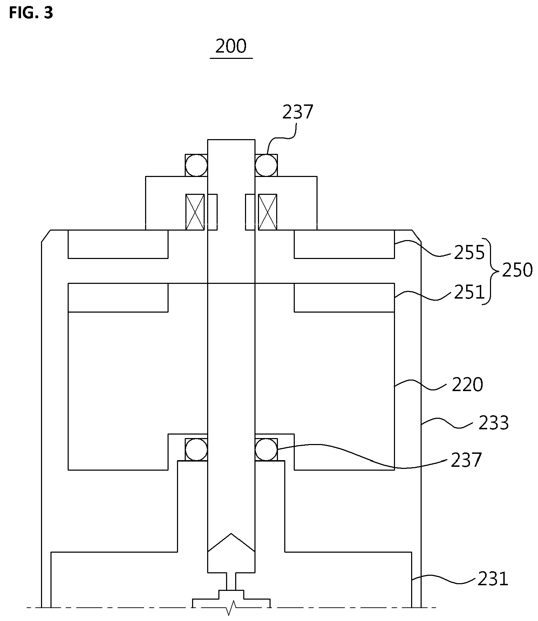

FIG. 3 is a cross-sectional view illustrating a configuration of a flywheel energy storage device according to the second example embodiment.

In a flywheel energy storage device 200 according to the present example embodiment, a mounting position of the buoyancy unit 150 differs from that in the energy storage device according to the first example embodiment.

The buoyancy unit 150 also includes a permanent magnet 251 and a superconductor 255. The permanent magnet 251 may be attached at an upper end portion of a rotation body 220, and the superconductor 255 may be attached to the interior of an upper wall of a cover frame 233. That is, the permanent magnet 251 and the superconductor 255 may be mounted to the rotation body and the cover frame, respectively, so that the superconductor 255 may be positioned above the permanent magnet 251.

Although not illustrated, a temperature of the superconductor 255 may be adjusted due to the effect of a cooling portion. Through this, it is possible to adjust a distance between the superconductor 255 and the permanent magnet 251. The rotation body 220 may rotate in a state of being buoyed relative to a support frame 231.

Since the rotation body 220 rotates in this buoyancy state by way of the buoyancy unit 250, it is possible to enhance the energy conversion efficiency by minimizing the friction loss. Also, it is possible to apply the energy storage device 200 to a large capacity and to minimize an increase in cost by applying the buoyancy by the superconductor 255 and a mechanical bearing 237 together.

Hereinafter, an energy storage device according to a third example embodiment will be described. Here, a description relating to the substantially same portion to the energy storage device according to the aforementioned example embodiments will be omitted.

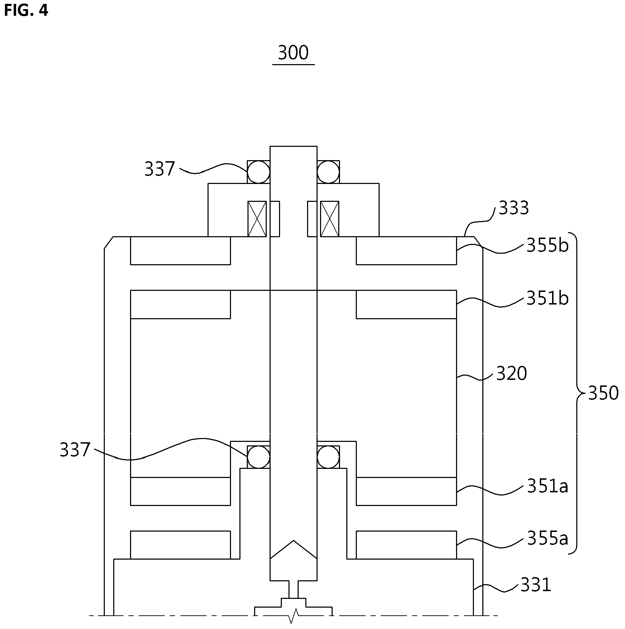

FIG. 4 is a cross-sectional view illustrating a configuration of a flywheel energy storage device according to the third example embodiment.

Referring FIG. 4, a buoyancy unit 350 according to the present example embodiment is provided in each of an upper portion and a lower portion of an energy storage device 300 based on a rotation body 320 to buoy a rotation body 320 through interaction.

A permanent magnet 351a may be attached at a lower end portion of the rotation body 320 and a superconductor 355a may be attached at an upper end portion of a support frame 331 to be positioned below the permanent magnet 351a. A permanent magnet 351b may be attached at an upper end portion of the rotation body 320 and a superconductor 355b may be attached to the interior of an upper wall of a cover frame 333 to be positioned above the permanent magnet 351b.

A temperature of the superconductors 355a and 355b of the buoyancy unit 350 configured as above may be adjusted due to the effect of a cooling portion (not shown). Through this, it is possible to adjust a distance between the superconductor 355a, 355b and the permanent magnet 351a, 351b. The rotation body 320 may rotate in a state of being buoyed relative to the support frame 331.

Since the rotation body 320 rotates in this buoyancy state by way of the buoyancy unit 350, it is possible to enhance the energy conversion efficiency by minimizing the friction loss. Also, it is possible to apply the energy storage device 300 to a large capacity and to minimize an increase in cost by applying the buoyancy of the superconductors 355a and 355b and a mechanical bearing 337 together.

Hereinafter, an energy storage device according to a fourth example embodiment will be described. Here, a description relating to the substantially same portion to the energy storage device according to the aforementioned example embodiments will be omitted.

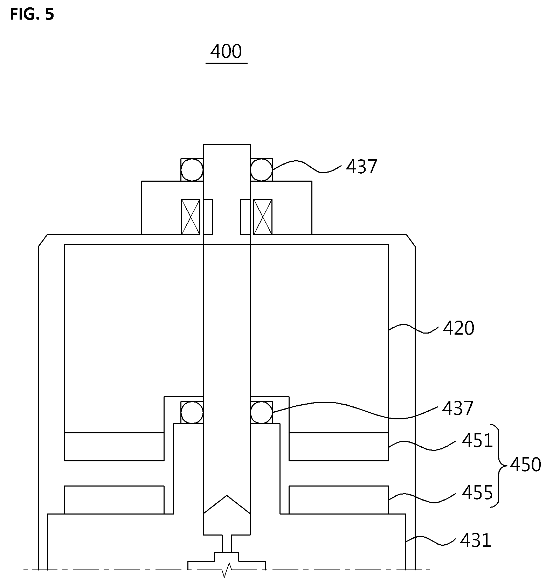

FIG. 5 is a cross-sectional view illustrating a configuration of a flywheel energy storage device according to the fourth example embodiment.

Referring to FIG. 5, an energy storage device 400 according to the present example embodiment includes a buoyancy unit 450 that includes a single pair of permanent magnets 451 and 455 having the same pole. That is, it is possible to buoy a rotation body 420 using a repulsive force occurring between the permanent magnets 451 and 455.

One permanent magnet 451 may be attached at a lower end portion of the rotation body 420 and the other permanent magnet 455 may be attached at an upper end portion of a support frame 431. Due to the repulsive force occurring therebetween, the rotation body 420 may be buoyed relative to the support frame 431 and may rotate in this buoyancy state.

Since the rotation body 420 rotates in the buoyancy state by way of the buoyancy unit 450, it is possible to enhance the energy conversion efficiency by minimizing the friction loss. Also, it is possible to apply the energy storage device 400 to a large capacity and to minimize an increase in cost by applying the buoyancy by the permanent magnets 451 and 455 and a mechanical bearing 437 together.

Hereinafter, an energy storage device according to a fifth example embodiment will be described. Here, a description relating to the substantially same portion to the energy storage device according to the aforementioned example embodiments will be omitted.

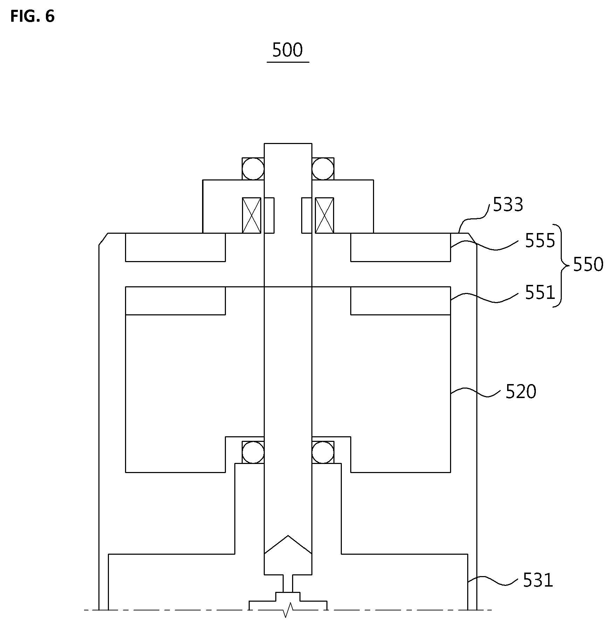

FIG. 6 is a cross-sectional view illustrating a configuration of a flywheel energy storage device according to the fifth example embodiment.

Referring to FIG. 6, a buoyancy unit 550 of an energy storage device 500 according to the present example embodiment may include a single pair of permanent magnets 551 and 555 having different poles, which is different from the third example embodiment. That is, it is possible to buoy a rotation body 520 using a pulling force occurring between the permanent magnets 551 and 555.

One permanent magnet 551 may be attached at an upper end portion of the rotation body 520, and the other permanent magnet 555 may be attached to the interior of an upper wall of a cover frame 533. Due to the pulling force occurring therebetween, the rotation body 520 may be buoyed relative to a support frame 531 and may rotate in this buoyancy state.

Hereinafter, an energy storage device according to a sixth example embodiment will be described. Here, a description relating to the substantially same portion to the energy storage device according to the aforementioned example embodiments will be omitted.

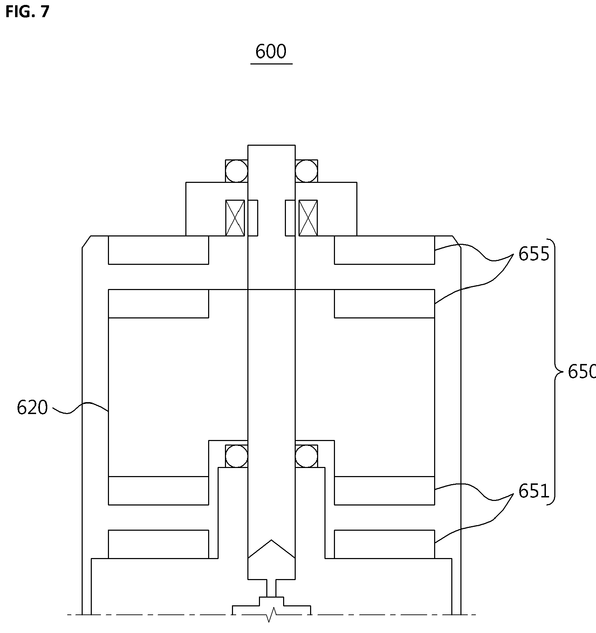

FIG. 7 is a cross-sectional view illustrating a configuration of a flywheel energy storage device according to the sixth example embodiment.

Referring to FIG. 7, a buoyancy unit 650 of an energy storage device 600 according to the present example embodiment may include two pairs of permanent magnets 651 and 655. One pair of permanent magnets 651 are disposed in a lower portion based on a rotation body 620 and may have the same pole. The other pair of permanent magnets 655 are disposed in an upper portion based on the rotation body 620 and have different poles.

Accordingly, since a force for pushing the rotation body 620 in a downward direction and a force for pulling the rotation body 620 in an upward direction simultaneously occur, the rotation body 620 may be buoyed and may rotate in this buoyancy state.

Hereinafter, an energy storage device according to a seventh example embodiment will be described. Here, a description relating to the substantially same portion to the energy storage device according to the aforementioned example embodiments will be omitted.

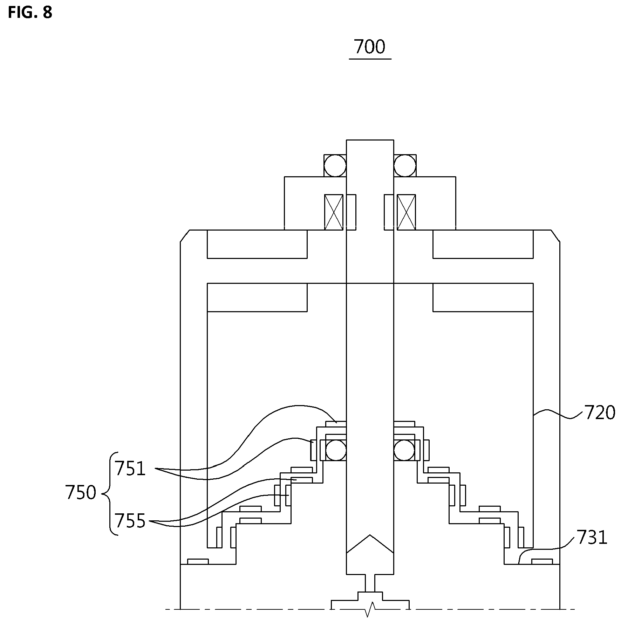

FIG. 8 is a cross-sectional view illustrating a configuration of a flywheel energy storage device according to the seventh example embodiment.

Referring to FIG. 8, a rotation body 720 and a support frame 731 of an energy storage device 700 according to the present example embodiment may be provided in a mutually corresponding step form. A buoyancy unit 750 may be attached thereto. In detail, a lower end portion of the rotation body 720 and an upper end portion of the support frame 731 disposed to face the same may be provided in a corresponding step form. A unit-type permanent magnet 751 may be attached to the ceiling and the side of each step of the rotation body 720, and a unit-type superconductor 755 may be attached to the bottom and the side of each step of the support frame 731 to correspond thereto.

As described above, since the permanent magnet 751 and the superconductor 755 are provided in a complex structure, the buoyancy of the rotation body 720 relative to the support frame 731 may be smoothly performed. In particular, although not illustrated, a temperature of the superconductor 755 may be adjusted by forming a circulation line of a cooling portion along the upper end portion of the support frame 731. Accordingly, the buoyancy of the rotation body 720 relative to the support frame 731 may be precisely controlled.

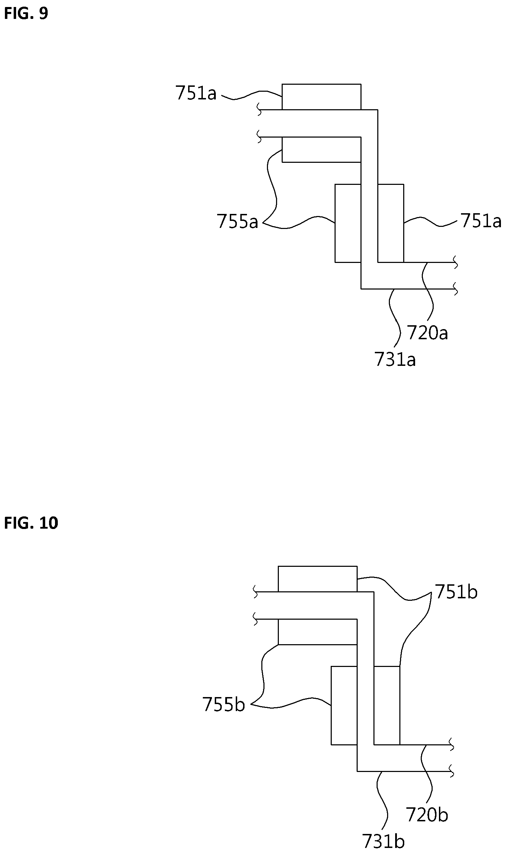

FIGS. 9 through 12 partially illustrate various modification examples of FIG. 8.

Referring to FIG. 9, a permanent magnet 751a may be attached to the ceiling and the side of a rotation body 720a, and a superconductor 755a may be attached to the top and the side of a support frame 731a to one-to-one correspond to the permanent magnet 751a. Accordingly, due to interaction between the superconductor 755a and the permanent magnet 751a, the rotation body 720a may be buoyed and rotate in this buoyancy state.

Referring to FIG. 10, a permanent magnet 751b may be attached to the ceiling and the side of a rotation body 720b and a permanent magnet 755b one-to-one corresponding to the permanent magnet 751b and having the same pole may be attached to the top and the side of a support frame 731b. Due to a repulsive force occurring between the permanent magnets 751b and 755b, the rotation body 720b may be buoyed and rotate in this buoyancy state.

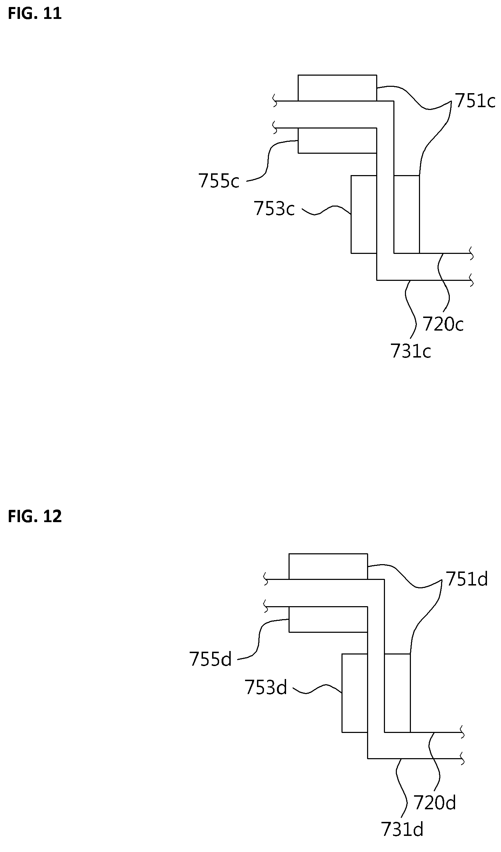

Referring to FIG. 11, a permanent magnet 751c may be attached to the ceiling and the side of a rotation body 720c, a superconductor 755c may be attached to the top of a support frame 731c, and a permanent magnet 753c may be attached to the side of the support frame 731c. Through this configuration, the rotation body 720c may be buoyed and may rotate in this buoyancy state.

Referring to FIG. 12, a permanent magnet 751d may be attached to the ceiling and the side of a rotation body 720d, a permanent magnet 755d may be attached to the top of a support frame 731d, and a superconductor 753d may be attached to the side of the support frame 731d. Through this configuration, the rotation body 720d may be buoyed and rotate in this buoyancy state.

By disposing the permanent magnet 751 or the superconductor 755 at a corresponding position for interaction therebetween, the buoyancy of the rotation body 720 relative to the support frame 731 is enabled and the friction loss may be minimized by executing the rotation of the rotation body 720 in the buoyancy state.

Although the example embodiments describe a configuration of including a permanent magnet, a superconductor, and a ball bearing, it is only an example and without being limited thereto, a system may be optimized by variously modifying three bearing structures based on a length of a rotary shaft and a system formation.

Although example embodiments have been shown and described, the present disclosure is not limited thereto. Instead, it would be appreciated by those skilled in the art that various changes and modifications may be made to the example embodiments without departing from the principles and scope of the invention, the scope of which is defined by the claims and their equivalents.

### Industrial Applicability

Included in the detailed description

## Claims

1. An energy storage device to store electrical energy generated at an electricity generator as rotational kinetic energy or to supply the stored rotational kinetic energy to the electricity generator, the energy storage device comprising:
a rotation body having a rotary shaft;
a housing having a bearing for rotatably supporting the rotary shaft, and configured to support or surround at least a portion of the rotation body; and
a buoyancy unit of which a portion is coupled to the rotation body and another portion is coupled to the housing, thereby generating a force for buoying the rotation body.

2. The energy storage device of claim 1, wherein the buoyancy unit comprises:
a permanent magnet provided to one of the housing and the rotation body; and
a superconductor provided to the other one of the housing and the rotation body,and
the buoyancy unit is configured to buoy the rotation body by interaction between the permanent magnet and the superconductor.

3. The energy storage device of claim 2, wherein the housing comprises:
a support frame configured to rotatably support a lower end portion of the rotary shaft; and
a cover frame configured to cover at least a portion of the support frame and the rotation body, and
one of the permanent magnet and the superconductor is attached to the cover frame or the support frame, and the other one of the permanent magnet and the superconductor is attached to the rotation body.

4. The energy storage device of claim 3, wherein the permanent magnet is attached at a lower end portion of the rotation body, and the superconductor is attached at an upper end portion of the support frame to be positioned below the permanent magnet.

5. The energy storage device of claim 4, wherein the lower end portion of the rotation body and the upper end portion of the support frame are provided in a corresponding step form,
a unit-type permanent magnet is attached to the ceiling and the side of each stair of the rotation body, and
a unit-type superconductor is attached to the bottom and the side of each stair of the support frame to correspond to the unit-type permanent magnet.

6. The energy storage device of claim 3, wherein the permanent magnet is attached at an upper end portion of the rotation body, and the superconductor is attached to the interior of an upper wall of the cover frame to be positioned above the permanent magnet.

7. The energy storage device of claim 1, wherein the buoyancy unit comprises a permanent magnet and a superconductor,
the housing comprises:
a support frame configured to rotatably support a lower end portion of the rotary shaft;
a cover frame configured to cover the support frame and the rotation body,
the superconductor is attached at an upper end portion of the support frame and the permanent magnet is attached at a lower end portion of the rotation body,and
the permanent magnet is attached at an upper end portion of the rotation body and the superconductor is attached to the interior of an upper wall of the cover frame.

8. The energy storage device of claim 2, further comprising:
a cooling portion configured to provide a cooling material for cooling the superconductor.

9. The energy storage device of claim 8, wherein the cooling portion comprises:
a circulation line configured to provide and then retrieve the cooling material to and from an area to which the superconductor is provided;
a liquefying member disposed on the circulation line and configured to liquefy the cooling material; and
a pumping member configured to pump the cooling material to transport the cooling material through the circulation line.

10. The energy storage device of claim 1, wherein the buoyancy unit comprises at least a single pair of permanent magnets, one being provided to one of the housing and the rotation body and the other being provided to the other one thereof to correspond to each other, and
the at least a single pair of permanent magnets have the same pole or different poles.

11. The energy storage device of claim 10, wherein the housing comprises:
a support frame configured to rotatably support a lower end portion of the rotary shaft; and
a cover frame configured to cover at least a portion of the support frame and the rotation body, and
one of the single pair of permanent magnets having the same pole is attached at an upper end portion of the support frame and the other one thereof is attached at a lower end portion of the rotation body.

12. The energy storage device of claim 10, wherein the housing comprises:
a support frame configured to rotatably support a lower end portion of the rotary shaft; and
a cover frame configured to cover at least a portion of the support frame and the rotation body, and
one of the single pair of permanent magnets having the different poles is attached at an upper end portion of the rotation body and the other one thereof is attached to the interior of an upper wall of the cover frame.

13. The energy storage device of claim 10, wherein the housing comprises:
a support frame configured to rotatably support a lower end portion of the rotary shaft; and
a cover frame configured to cover at least a portion of the support frame and the rotation body, and
one of the single pair of permanent magnets having the same pole is attached at an upper end portion of the support frame and the other one thereof is attached at a lower end portion of the rotation body, and
one of the single pair of permanent magnets having the different poles is attached at an upper end portion of the rotation body and the other one thereof is attached to the interior of an upper wall of the cover frame.

14. The energy storage device of claim 1, wherein the bearing is configured using a single pair of ball bearings provided at an upper end portion and a lower end portion of the rotary shaft, respectively, to rotatably support the rotary shaft.

15. An energy storage device to store electrical energy generated at an electricity generator as rotational kinetic energy or to supply the stored rotational kinetic energy to the electricity generator, the energy storage device comprising:
a rotation body having a rotary shaft;
a housing configured to rotatably support the rotary shaft and to surround at least a portion of the rotation body;
a permanent magnet provided to one of the rotation body and the housing;
a superconductor provided to the other one of the rotation body and the housing to face the permanent magnet; and
a cooling portion configured to provide a cooling material for cooling the superconductor.

16. The energy storage device of claim 15, wherein the housing comprises:
a support frame configured to rotatably support a lower end portion of the rotary shaft; and
a cover frame configured to cover at least a portion of the support frame and the rotation body, and
one of the permanent magnet and the superconductor is attached to the cover frame or the support frame, and the other one of the permanent magnet and the superconductor is attached to the rotation body.

17. The energy storage device of claim 16, wherein the permanent magnet is attached at a lower end portion of the rotation body, and the superconductor is attached at an upper end portion of the support frame to be positioned below the permanent magnet.

18. The energy storage device of claim 16, wherein the permanent magnet is attached at an upper end portion of the rotation body, and the superconductor is attached to the interior of an upper wall of the cover frame to be positioned above the permanent magnet.

19. The energy storage device of claim 15, wherein the cooling portion comprises:
a circulation line configured to provide and then retrieve the cooling material to and from an area to which the superconductor is provided;
a liquefying member disposed on the circulation line and configured to liquefy the cooling material; and
a pumping member configured to pump the cooling material to transport the cooling material through the circulation line.

20. The energy storage device of claim 15, wherein the housing comprises a single pair of ball bearings provided at an upper end portion and a lower end portion of the rotary shaft, respectively, to rotatably support the rotary shaft.
